# FASCICULE DE BREVET EUROPEEN

(11) **EP 4 248 095 B1**
(45) Date de publication et mention de la délivrance du brevet: **23.10.2024**
(21) Numéro de dépôt: 21819924.8
(22) Date de dépôt: 10.11.2021
(51) Int. Cl.: F04D 29/32, F01D 5/14, F01D 25/02, F01D 25/10, F04D 29/58

(54) **AUBE COMPRENANT UN BOUCLIER AYANT UNE CONDUITE DE PASSAGE D'AIR DE DÉGIVRAGE**
SCHAUFEL MIT EINEM SCHIRM MIT ABTAULUFTDURCHGANGSKANAL
BLADE COMPRISING A SHIELD HAVING A DEFROSTING AIR PASSAGE DUCT

(30) Priorité: 20.11.2020 FR 2011930
(43) Date de publication de la demande: 27.09.2023
(73) Titulaire: SAFRAN AIRCRAFT ENGINES, 75015 Paris (FR)
(72) Inventeur: GONDRE, Guillaume Pascal Jean-Charles, 77550 MOISSY-CRAMAYEL (FR); LEGER, Morgane Astrid, 77550 MOISSY-CRAMAYEL (FR); MAHIAS, Stéphane, Roger, 77550 MOISSY-CRAMAYEL (FR); MAUVAIS, Romuald Bernard, 77550 MOISSY-CRAMAYEL (FR)
(74) Mandataire: Regimbeau
(86) Numéro de dépôt international: PCT/FR2021/051995
(87) Numéro de publication internationale: WO 2022/106772

(56) Documents cités:
- WO-A2-2010/128240
- WO-A2-2012/066262
- DE-A1- 3 815 906
- US-A1- 2020 332 658

## Description

### DOMAINE TECHNIQUE GENERAL

L'invention concerne une aube de turbomachine ayant des propriétés de dégivrage ainsi qu'une roue aubagée d'un rotor de soufflante comportant une telle aube.

### ETAT DE LA TECHNIQUE

Un rotor de soufflante de turbomachine comporte généralement un disque portant sur sa périphérie extérieure des aubes dont les pieds sont engagés dans des rainures de la périphérie extérieure du disque.

Le dimensionnement des aubes doit permettre des performances aérodynamiques optimales tout en garantissant la tenue mécanique de l'aube et en limitant également la signature acoustique de l'aube. L'amélioration des performances aérodynamiques des aubes tend vers une augmentation du diamètre externe et donc de l'envergure des aubes ce qui tend à une diminution de la vitesse de rotation.

Un problème est qu'en diminuant la vitesse de rotation, de l'accrétion de glace peut être générée sur les aubes, la vitesse plus élevée permettant la séparation de la glace de l'aube.

L'accrétion de glace nuit aux performances aérodynamiques de la soufflante ce qui est dommageable.

Le document US 2020/332658 A1 divulgue une aube avec un conduit de passage d'air de dégivrage de l'état de la technique.

### PRESENTATION DE L'INVENTION

L'invention propose de pallier au moins un de ces inconvénients.

A cet effet, l'invention propose selon un premier aspect une aube comportant un corps, le corps comportant, dans le sens d'écoulement d'un flux d'air, une extrémité amont et une extrémité aval, une tête radialement externe, un pied radialement interne, l'aube comprenant entre la tête et le pied une pale destinée à travailler aérodynamiquement dans le flux d'air, une échasse raccordée au pied lui-même destiné à être fixé dans une alvéole d'un disque de rotor d'une roue aubagée de soufflante de turbomachine, l'aube comporte en outre un bouclier rapporté à l'extrémité amont du corps, le bouclier comportant une extrémité amont formant un bord d'attaque de l'aube, le bouclier comportant en outre un nez à l'amont duquel se situe le bord d'attaque, une ailette intrados et une ailette extrados rapportées latéralement sur la pale, lesdites ailettes s'étendant depuis le nez, l'aube comprenant un conduit de passage d'air de dégivrage disposé à l'intérieur du nez et s'étendant radialement à l'intérieur du nez, ledit conduit ayant une extrémité interne débouchant en face de l'échasse et une extrémité radialement externe débouchant du nez entre le bord d'attaque et sa jonction à l'ailette intrados, le conduit présentant une première portion rectiligne et une deuxième portion coudée s'étendant depuis l'extrémité de la première portion rectiligne.

L'invention, selon le premier aspect, est avantageusement complétée par les caractéristiques suivantes, prises seules ou en une quelconque de leur combinaison techniquement possible :
- l'extrémité radialement externe est configurée pour que l'air circulant dans le conduit soit évacué dans le sens d'écoulement du flux d'air dans la soufflante de turbomachine ;
- le conduit de passage d'air est disposé dans la première moitié de la hauteur de la pale prise entre sa tête et le pied, de préférence dans la première moitié de la hauteur prise entre l'échasse et la tête de l'aube ;
- le conduit est de section interne cylindrique, ou le conduit est serpenté ;
- le conduit a été obtenu au moyen d'un procédé de fabrication additive.
- le conduit présente une largeur ou un diamètre interne inférieur ou égal à 3mm ;
- l'aube comprend des moyens de d'acheminement d'air de dégivrage destinée à provenir d'un compresseur haute pression vers l'entrée du conduit de passage d'air de dégivrage ;
- les moyens d'acheminement d'air de dégivrage sont constitués par une conduite formée dans l'échasse de l'aube ou bien constitués par une conduite cheminant au niveau du disque de liaison de l'aube, les moyens d'acheminement comprenant en outre un raccord de la conduite au conduit de passage d'air de dégivrage.

Selon un deuxième aspect, l'invention comprend une roue aubagée de soufflante de turbomachine, comprenant au moins une aube selon le premier aspect de l'invention. Selon un troisième aspect, l'invention comprend une roue aubagée de soufflante de turbomachine, comprenant au moins une aube selon le premier aspect de l'invention et un disque dans lequel est inséré le pied de l'aube, le disque comprenant une jante, la roue étant telle que les moyens d'acheminement d'air de dégivrage sont constitués par une conduite formée par usinage de la jante du disque.

Selon un quatrième aspect, l'invention concerne une turbomachine comprenant une roue aubagée selon le deuxième aspect ou selon le troisième aspect.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
la figure 1 illustre une vue schématique en coupe de la partie amont d'une turbomachine ;
la figure 2 illustre une aube conforme à l'invention ;
la figure 3 illustre une vue en détail de l'aube de la figure 2 ;
les figures 4 et 5 illustrent, chacune, une vue de l'aube avec des moyens d'acheminement de l'air de dégivrage selon une première variante de réalisation ;
la figure 6 illustre une vue de l'aube avec des moyens d'acheminement de l'air de dégivrage selon une deuxième variante de réalisation ;
la figure 7 illustre une vue d'un verrou utilisé pour fixer l'aube et impliqué dans la deuxième variante de réalisation.
Sur l'ensemble des figures les éléments similaires portent des références identiques.

### DESCRIPTION DETAILLEE

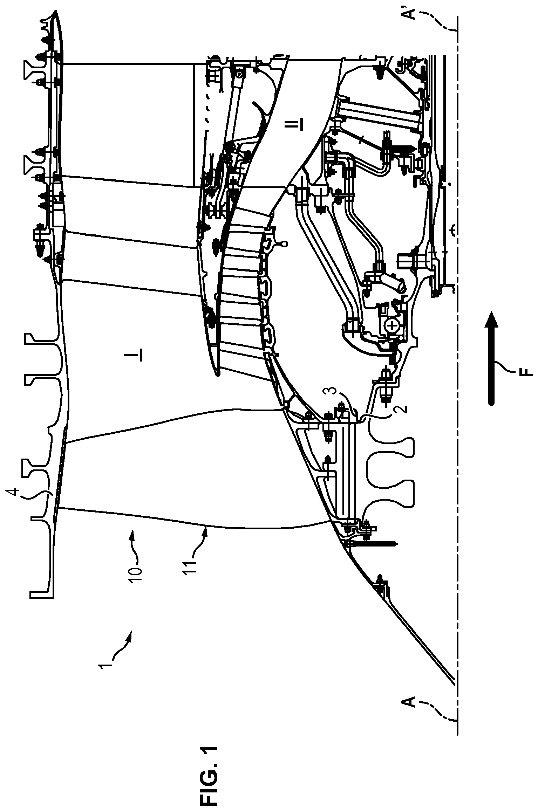

La figure 1 illustre une vue en coupe de la partie amont d'une turbomachine. En particulier une soufflante et l'entrée de la veine primaire I et secondaire II sont visibles. La soufflante 1 comprend notamment une roue 10 aubagée comprenant des aubes 11 chacune fixée à une alvéole 2 d'un disque 3 du rotor. La soufflante 1 comprend ici également un carter 4 entourant la roue aubagée mais les aubes qui vont être décrites peuvent aussi appartenir à une soufflante non carénée.

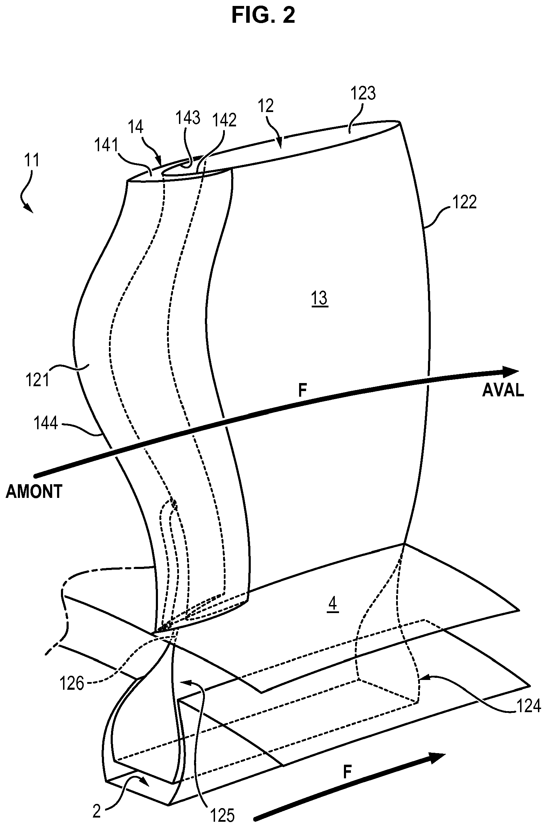

La figure 2 illustre une vue détaillée d'une aube 11. Une telle aube 11 comprend un corps 12. Le corps est de préférence en composite présentant une préforme tissée 3D noyée dans une résine.

Le corps 12 comprend, dans le sens F d'écoulement d'un flux d'air, une extrémité amont 121 et une extrémité aval 122, une tête 123 radialement externe, un pied 124 radialement interne. On précise également que dans ce qui suit, l'amont et l'aval sont définis par rapport au sens d'écoulement du flux, la notion de direction radiale, s'entend par rapport à l'axe de rotation de la turbomachine.

L'aube comprend entre la tête 123 et le pied 124 une pale 13 destinée à travailler aérodynamiquement dans le flux d'air. La pale 13 constitue la partie aérodynamique de l'aube 11.

En outre, l'aube 11 comprend une échasse 125 raccordée au pied 124 lui-même fixé dans l'alvéole 2 du disque 3 de rotor. L'échasse 125 est donc la partie entre le pied 124 de l'aube 11 et une plateforme 5 inter-aubes. Le pied 124 est quant à lui la partie inférieure de l'aube insérée dans l'alvéole 2 du disque. La pale 13 est donc au-dessus de l'échasse 125 (selon une direction prise entre le pied et la tête de l'aube) et au-dessus de la plateforme 5 inter-aubes.

Afin de protéger l'aube 11 un bouclier 14 est rapporté à l'extrémité amont du corps 12 de l'aube 11. En particulier, le bouclier 14 est rapporté sur la pale 13 de l'aube 11. Un tel bouclier 14 permet de protéger l'aube vis-à-vis des impacts d'oiseaux et joue un rôle vis-à-vis des problématiques liées à l'érosion. Le bouclier 14 comprend une extrémité amont formant un bord d'attaque 144 de l'aube 11. Sur la figure 2, on distingue en pointillés le profil du corps de l'aube 11 sous le bouclier 14.

De manière avantageuse, le bouclier 14 est métallique, de préférence en Titane. D'autres types de métaux peuvent être prévus. On comprendra, que le type de matériau choisi pour le bouclier doit satisfaire des contraintes mécaniques et aérodynamiques.

La fixation du bouclier 14 à l'aube 11 est mise en oeuvre par collage ou par brasure sur le corps 12 de l'aube 11.

De manière complémentaire, le bouclier 14 comprend un nez 141 plein et deux ailettes 142, 143, une ailette 142 intrados et une ailette extrados 143. Les ailettes s'étendent depuis le nez 141 et sont aussi rapportées au corps de l'aube 11 de préférence par collage. En outre, les ailettes 142, 143 présentent une épaisseur inférieure à l'épaisseur du nez plein.

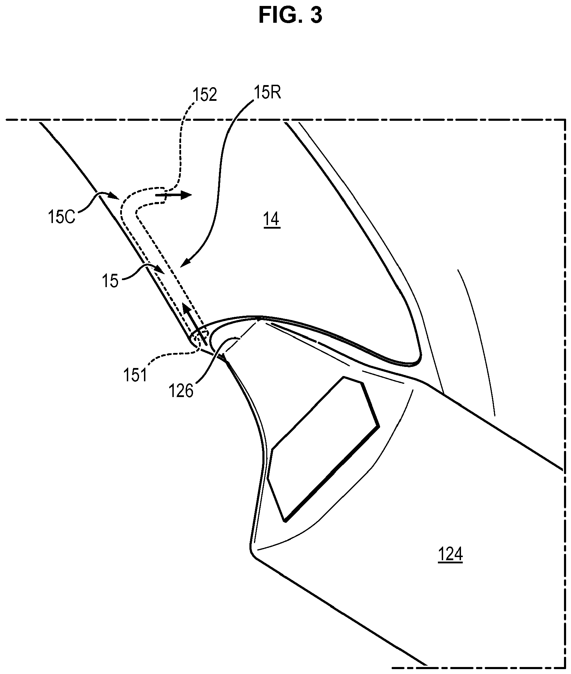

Afin d'éviter des accrétions de glace au niveau du bord d'attaque 144 et comme cela est visible sur la figure 3, un conduit 15 de passage d'air de dégivrage est prévu à l'intérieur du bouclier 14. Le conduit 15 est formé dans le nez 141 plein du bouclier 14. Comme il s'agit de la partie la plus épaisse du bouclier 14 c'est à cet endroit que cela nuit le moins aux performances de l'aube. En effet, le fait de prévoir un conduit implique une modification structurelle du bouclier 14 qui est soumis à de fortes contraintes mécaniques.

Le conduit 15 présente une entrée 151 d'air et une sortie d'air 152. Le conduit s'étend radialement selon une direction radiale prise entre le pied 125 et la tête 123 de l'aube 11. L'entrée 151 d'air est disposée en face de l'échasse 125 au niveau de son raccordement 126 à la pale 13 et la sortie d'air 152 débouche du nez plein entre le bord d'attaque et l'ailette intrados. Le conduit est tel que l'air débouche vers l'aval pour ne pas gêner la circulation du flux d'air dans la soufflante. La sortie d'air 152 est de préférence située là où la pression est la moins importante dans la soufflante.

Pour que la sortie du conduit 15 débouche du nez plein entre le bord d'attaque et l'ailette intrados, ce dernier présente une première portion 15R rectiligne s'étendant radialement selon une direction prise entre le pied 125 et la tête 123 de l'aube 11 et une deuxième portion 15C coudée s'étendant depuis l'extrémité de la première portion rectiligne 15R la plus éloignée du pied 124.

De préférence, le conduit 15 est obtenu par un procédé de fabrication additive et peut prendre plusieurs formes. Sur les figures, le conduit 15 est coudé et de section interne cylindrique mais il peut prendre d'autres formes. En particulier, il peut être serpenté. Le critère retenu pour la forme du conduit 15 est la tenue mécanique du bouclier 14. Par la terminologie « serpenté », il est possible de considérer un conduit sensiblement droit sur une majorité de son étendue radiale et coudé à son extrémité radialement externe 154 débouchant du nez entre le bord d'attaque et sa jonction à l'ailette intrados comme schématisé à la figure 2.

Afin de modifier le moins possible le bouclier 14 et de ne pas trop modifier ses propriétés mécaniques, le diamètre ou la largeur du conduit 15 à l'intérieur du bouclier est inférieur ou égal à 3 mm.

C'est en faisant circuler de l'air dans le conduit 15 à l'intérieur du bouclier 14 que les accrétions de glace sont évitées.

Le conduit 15 s'étend sur une hauteur radiale de la pale 13. Cette hauteur radiale du conduit 15 est choisie en fonction de l'endroit où les accrétions de glace sont le plus souvent présentes et pour ne pas altérer le comportement aérodynamique et mécanique de l'aube. En effet, un critère mécanique primordial est la tenue à l'ingestion de corps étrangers. L'ingestion d'oiseaux de grande taille est critique sur une hauteur proche de 50% de hauteur d'aube, et l'ingestion d'oiseaux de taille moyenne est critique sur une hauteur proche de 85% de hauteur d'aube. Ainsi, le bas de la pale (sous les 50% de hauteur d'aube) est moins critique pour l'ingestion et une légère dégradation mécanique à cet endroit est acceptable. C'est pour cela que le conduit est dans cette partie.

Pour éviter les accrétions de glace, de préférence de l'air chaud circule dans le conduit 15, l'air chaud pouvant être prélevé à différents endroits de la turbomachine. L'air prélevé provient de préférence d'un compresseur haute pression situé en aval. Il peut être envisagé toute autre provenance de prélèvement dans le flux par exemple d'une turbine par exemple dans le cadre une soufflante d'un open rotor.

L'acheminement de l'air depuis le compresseur haute pression peut se faire de plusieurs manières.

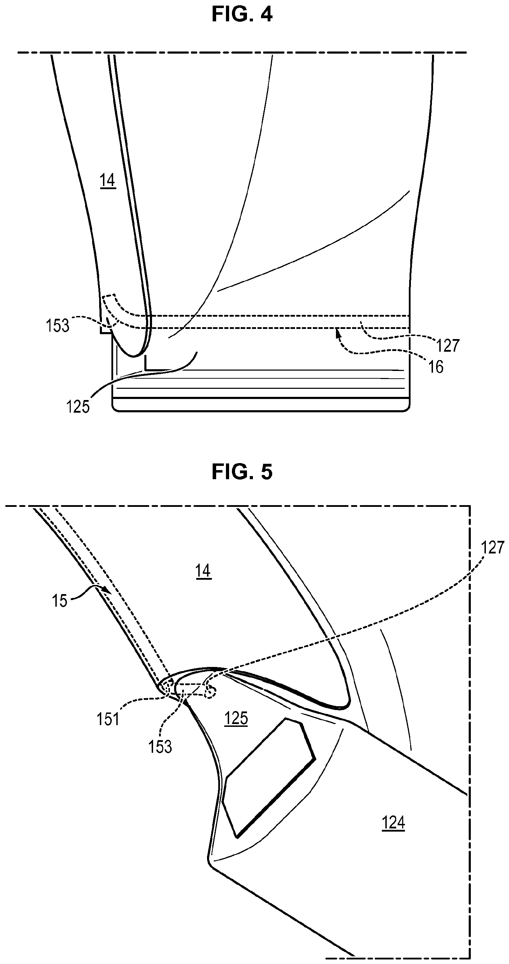

Comme illustré sur les figures 4 et 5, selon une première manière, on prévoit une conduite 16 qui achemine l'air prélevé sur le compresseur haute pression pour l'amener à l'entrée du conduit 15. De préférence, une telle conduite 16 est prévue dans l'échasse 125. Pour ce faire, on prévoit une cavité 127 dans l'échasse 125 et on insère la conduite 16 dans la cavité 127. Une telle cavité 127 est obtenue par le tissage d'une déliaison à coeur sur toute la longueur de corde de l'aube. Ensuite un raccord 153 coudé constituant la deuxième portion de la conduite 16 permet de raccorder la conduite 16 au conduit 15 de passage d'air de dégivrage.

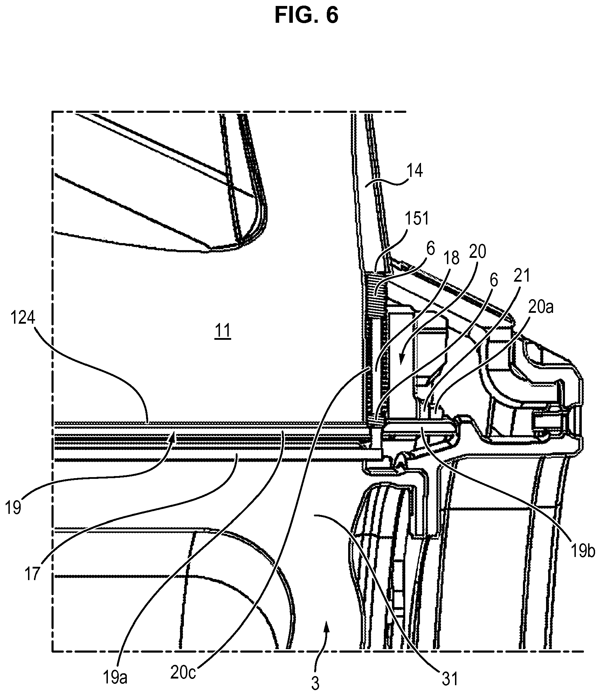

De manière alternative, comme illustré sur la figure 6, selon une deuxième variante, de l'air provient du disque 3 plutôt que de l'échasse 125 de l'aube. Selon cette alternative, il n'est pas nécessaire de prévoir une conduite dans le composite. Au lieu de ça, un usinage d'une conduite 17 dans la jante 31 du disque permet de faire passer de l'air de l'aval du disque jusqu'au niveau du bouclier 18. Un canal 18 sort alors verticalement de la conduite 17 pour rejoindre l'entrée 151 du conduit 15 dans le bord d'attaque 15. Sur son trajet, la conduite 17 passe à travers une cale 19 et un verrou 20 du disque. En effet, pour monter l'aube dans l'alvéole 2, une cale 19 axiale est glissée sous le pied 124 de manière à assurer le maintien radial de l'aube dans l'alvéole 2. En outre, un verrou 20 perpendiculaire à la cale 19 est positionné dans des encoches ménagées dans les flancs de l'alvéole 2 du côté amont du disque 3 (pour des détails supplémentaires sur le montage avec le verrou 20 on pourra se référer au document WO 2012/150425).

Comme illustré sur cette figure 6, la cale 19 comprend une partie 19a qui vient se loger dans l'alvéole 2 et une patte 19b d'extrémité amont qui déborde du disque et sert de liaison avec le verrou 20. La liaison est assurée par une vis 21 qui traverse à la fois la patte 19b et une patte 20a solidaire du verrou 20, l'ensemble immobilisant l'aube dans son alvéole.

Un tel montage est assez simple dans la mesure où la cale 19 comprend de nombreux trous (non représentés). En revanche, pour passer au travers du verrou 20, le canal 18 (un tuyau flexible par exemple) traverse une structure alvéolée 20c (appelée nida) qui se situe juste en dessous du nez plein du bouclier 14.

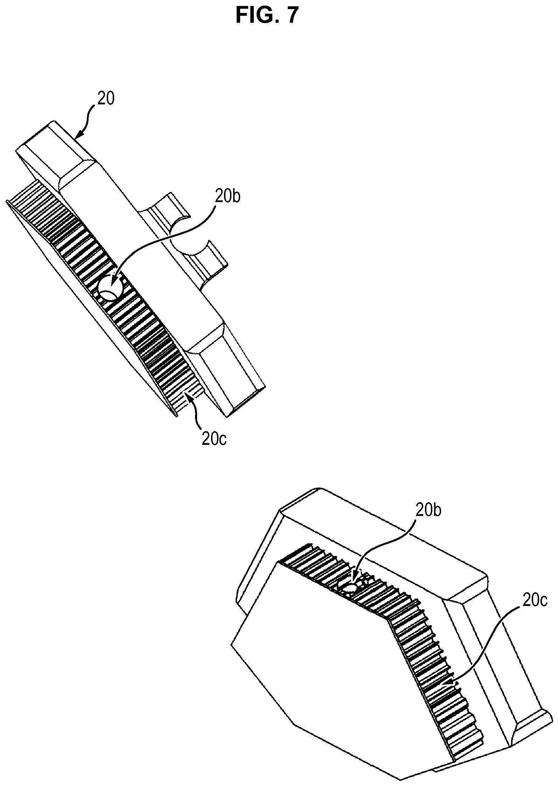

La figure 7 illustre une vue en perspective du verrou 20 avec le passage 20b pour le canal 18 et le nida 20c.

Enfin, pour assurer l'étanchéité, deux joints soufflet 6 sont prévus au niveau de chaque interface : un entre la conduite 17 et le canal 18 et un entre l'entrée 151 du conduit 15 et le canal 18.

## Revendications

1. Aube (11) comportant un corps (12), le corps comportant, dans le sens d'écoulement d'un flux d'air, une extrémité amont et une extrémité aval, une tête (123) radialement externe, un pied (124) radialement interne, l'aube (11) comprenant entre la tête (123) et le pied (124) une pale (13) destinée à travailler aérodynamiquement dans le flux d'air (F), une échasse (125) raccordée au pied lui-même destiné à être fixé dans une alvéole d'un disque de rotor d'une roue aubagée de soufflante de turbomachine,
l'aube (11) comporte en outre un bouclier (14) rapporté à l'extrémité amont du corps, le bouclier (14) comportant une extrémité amont formant un bord d'attaque (144) de l'aube, le bouclier (14) comportant en outre un nez (141) à l'amont duquel se situe le bord d'attaque, une ailette (142) intrados et une ailette (143) extrados rapportées latéralement sur la pale (13), lesdites ailettes (142, 143) s'étendant depuis le nez (141), l'aube (11) comprenant un conduit (15) de passage d'air de dégivrage disposé à l'intérieur du nez (141) et s'étendant radialement à l'intérieur du nez (141), ledit conduit (15) ayant une extrémité interne (151) formant une entrée d'air pour le conduit (15), l'entrée d'air débouchant en face de l'échasse (125) et une extrémité radialement externe (152) formant sortie d'air, la sortie d'air débouchant du nez (141) entre le bord d'attaque et sa jonction à l'ailette intrados (142), l'aube étant **caractérisée en ce que** le conduit (15) présente une première portion (15R) rectiligne et une deuxième portion (15C) coudée s'étendant depuis l'extrémité de la première portion rectiligne (15R).

2. Aube selon la revendication 1, dans laquelle l'extrémité radialement externe est configurée pour que l'air circulant dans le conduit (15) soit évacué dans le sens d'écoulement du flux d'air dans la soufflante de turbomachine.

3. Aube selon l'une des revendications précédentes, dans laquelle le conduit (15) de passage d'air est disposé dans la première moitié de la hauteur de la pale prise entre sa tête et le pied, de préférence dans la première moitié de la hauteur prise entre l'échasse et la tête de l'aube.

4. Aube selon l'une des revendications précédentes, dans laquelle le conduit (15) est de section interne cylindrique, ou serpenté.

5. Aube selon l'une des revendications précédentes, dans laquelle le conduit (15) a été obtenu au moyen d'un procédé de fabrication additive.

6. Aube selon l'une des revendications précédentes, dans laquelle le conduit (15) présente une largeur ou un diamètre interne inférieur ou égal à 3mm.

7. Aube selon l'une des revendications précédentes, comprenant des moyens de d'acheminement d'air de dégivrage destinée à provenir d'un compresseur haute pression vers l'entrée du conduit de passage d'air de dégivrage.

8. Aube selon la revendication précédente, dans laquelle les moyens d'acheminement d'air de dégivrage sont constitués par une conduite (16) formée dans l'échasse de l'aube ou bien constitués par une conduite (17) cheminant au niveau du disque de liaison de l'aube, les moyens d'acheminement comprenant en outre un raccord de la conduite (16, 17) au conduit (15) de passage d'air de dégivrage.

9. Roue aubagée de soufflante de turbomachine, comprenant au moins une aube (11) selon l'une des revendications précédentes.

10. Roue aubagée de soufflante de turbomachine, comprenant au moins une aube (11) selon l'une des revendications 1 à 8 et un disque (3) dans lequel est inséré le pied de l'aube, le disque (3) comprenant une jante (31), la roue étant telle que les moyens d'acheminement d'air de dégivrage sont constitués par une conduite formée par usinage de la jante (31) du disque (3).

11. Turbomachine comprenant une roue aubagée selon l'une des revendications 9 ou 10.

## Patentansprüche

1. Schaufel (11), die einen Körper (12) aufweist, wobei der Körper in der Strömungsrichtung eines Luftstroms ein stromaufwärtiges Ende und ein stromabwärtiges Ende, einen radial äußeren Kopf (123), einen radial inneren Fuß (124) aufweist, wobei die Schaufel (11) zwischen dem Kopf (123) und dem Fuß (124) ein Blatt (13), das dazu bestimmt ist, in dem Luftstrom (F) aerodynamisch zu arbeiten, eine Stütze (125), die mit dem Fuß verbunden ist, umfasst, der selbst dazu bestimmt ist, in einer Zelle einer Rotorscheibe eines beschaufelten Rads eines Turbomaschinengebläses befestigt zu sein,
wobei die Schaufel (11) ferner ein Schild (14) aufweist, das am stromaufwärtigen Ende des Körpers angebracht ist, wobei der Schild (14) ein stromaufwärtiges Ende aufweist, das eine Vorderkante (144) der Schaufel bildet, wobei der Schild (14) ferner eine Nase (141) aufweist, an deren stromaufwärtigem Ende sich die Vorderkante, eine Unterseitenrippe (142) und eine Oberseitenrippe (143) befindet, die seitlich am Blatt (13) angesetzt sind, wobei sich die Rippen (142, 143) ab der Nase (141) erstrecken, wobei die Schaufel (11) einen Kanal (15) für den Durchgang von Enteisungsluft umfasst, der im Inneren der Nase (141) angeordnet ist und sich radial im Inneren der Nase (141) erstreckt, wobei der Kanal (15) ein inneres Ende (151) aufweist, das einen Lufteinlass für den Kanal (15) bildet, wobei der Lufteinlass gegenüber der Stütze (125) mündet, und ein radial äußeres Ende (152), das einen Luftauslass bildet, wobei der Luftauslass aus der Nase (141) zwischen der Vorderkante und ihrer Verbindung mit der Unterseitenrippe (142) mündet, wobei die Schaufel **dadurch gekennzeichnet ist, dass** der Kanal (15) einen ersten geradlinigen Abschnitt (15R) und einen zweiten abgewinkelten Abschnitt (15C) aufweist, der sich vom Ende des ersten geradlinigen Abschnitts (15R) aus erstreckt.

2. Schaufel nach Anspruch 1, wobei das radial äußere Ende derart ausgelegt ist, dass die in dem Kanal (15) zirkulierende Luft in der Strömungsrichtung des Luftstroms im Turbomaschinengebläse abgeleitet wird.

3. Schaufel nach einem der vorhergehenden Ansprüche, wobei der Luftdurchgangskanal (15) in der ersten Hälfte der Höhe des Blatts zwischen seinem Kopf und dem Fuß angeordnet ist, vorzugsweise in der ersten Hälfte der Höhe zwischen der Stütze und dem Kopf der Schaufel.

4. Schaufel nach einem der vorhergehenden Ansprüche, wobei der Kanal (15) innen zylindrisch oder schlangenförmig ist.

5. Schaufel nach einem der vorhergehenden Ansprüche, wobei der Kanal (15) durch ein additives Fertigungsverfahren hergestellt wird.

6. Schaufel nach einem der vorhergehenden Ansprüche, wobei der Kanal (15) eine Breite oder einen Innendurchmesser von weniger als oder gleich 3 mm aufweist.

7. Schaufel nach einem der vorhergehenden Ansprüche, die Mittel zum Befördern von Enteisungsluft, die bestimmt ist, von einem Hochdruckkompressor zu kommen, zum Einlass des Enteisungsluftdurchgangskanals umfasst.

8. Schaufel nach vorhergehendem Anspruch, wobei die Enteisungsluft-Beförderungsmittel aus einem Kanal (16) bestehen, der in der Stütze der Schaufel ausgebildet ist, oder aus einem Kanal (17) bestehen, der im Bereich der Verbindungsscheibe der Schaufel verläuft, wobei die Beförderungsmittel ferner eine Verbindung des Kanals (16, 17) mit dem Enteisungsluftdurchgangskanal (15) umfassen.

9. Beschaufeltes Rad eines Turbomaschinengebläses, umfassend mindestens eine Schaufel (11) nach einem der vorhergehenden Ansprüche.

10. Beschaufeltes Rad eines Turbomaschinengebläses, umfassend mindestens eine Schaufel (11) nach einem der Ansprüche 1 bis 8 und eine Scheibe (3), in die der Fuß der Schaufel eingesetzt ist, wobei die Scheibe (3) eine Felge (31) umfasst, wobei das Rad derart ist, dass die Mittel zur Beförderung der Enteisungsluft aus einer Leitung bestehen, die durch Bearbeitung der Felge (31) der Scheibe (3) gebildet ist.

11. Turbomaschine, umfassend ein beschaufeltes Rad nach einem der Ansprüche 9 oder 10.

## Claims

1. A Blade (11) comprising a body (12), the body comprising, in the direction of flow of an air stream, an upstream end and a downstream end, a radially outer tip (123), a radially inner root (124), the blade (11) comprising, between the tip (123) and the root (124), a vane (13) intended to work aerodynamically in the airflow (F), a support (125) connected to the root itself intended to be fixed in a cell of a rotor disc of a bladed wheel of a turbomachine fan,
the blade (11) also comprising a shield (14) attached to the upstream end of the body, the shield (14) comprising an upstream end forming a leading edge (144) of the blade, the shield (14) also comprising a nose (141) on the upstream side of which the leading edge is located, a pressure face fin (142) and a suction face fin (143) laterally attached to the vane (13), said fins (142, 143) extending from the nose (141), the blade (11) comprising a duct (15) for the passage of de-icing air arranged inside the nose (141) and extending radially inside the nose (141), said duct (15) having an inner end (151) forming an air inlet for the duct (15), the air inlet opening out opposite the support (125) and a radially outer end (152) forming an air outlet, the air outlet emerging from the nose (141) between the leading edge and its junction with the pressure fan fin (142), the vane being **characterised in that** the duct (15) has a first rectilinear portion (15R) and a second angled portion (15C) extending from the end of the first rectilinear portion (15R).

2. The blade as claimed in claim 1, wherein the radially outer end is configured so that air flowing through the duct (15) is discharged in the direction of flow of the air stream in the turbomachine fan.

3. The blade according to one of the preceding claims, in which the air passage duct (15) is disposed in the first half of the height of the vane taken between its tip and the root, preferably in the first half of the height taken between the support and the tip of the blade.

4. The blade according to one of the preceding claims, in which the duct (15) has a cylindrical or serpentine internal cross-section.

5. The blade according to one of the preceding claims, in which the duct (15) has been obtained by means of an additive manufacturing method.

6. The blade according to one of the preceding claims, in which the duct (15) has a width or internal diameter less than or equal to 3 mm.

7. The blade according to one of the preceding claims, comprising means for conveying de-icing air intended to come from a high-pressure compressor to the inlet of the de-icing air passage duct.

8. The blade according to the preceding claim, in which the means for conveying de-icing air are constituted by a duct (16) formed in the support of the blade or constituted by a duct (17) extending at the level of the connecting disk of the blade, the conveying means further comprising a connection of the duct (16, 17) to the duct (15) for the passage of de-icing air.

9. Bladed wheel for a turbomachine fan, comprising at least one blade (11) according to one of the preceding claims.

10. Bladed wheel for a turbomachine fan, comprising at least one blade (11) according to one of claims 1 to 8 and a disk (3) into which the foot of the blade is inserted, the disc (3) comprising a rim (31), the wheel being such that the means of conveying de-icing air consist of a duct formed by machining the rim (31) of the disc (3).

11. Turbomachine comprising a bladed wheel according to one of claims 9 or 10.
